(19) Europäisches Patentamt
European Patent Office
Office européen des brevets

(11) Publication number: **0 124 808**
**B1**

(12) **EUROPEAN PATENT SPECIFICATION**

(45) Date of publication of patent specification: **13.12.89**

(51) Int. Cl.$^4$: **C 08 L 29/14,** C 09 J 3/14

(21) Application number: **84104356.5**

(22) Date of filing: **17.04.84**

(54) **Reactive plastisol dispersion.**

(30) Priority: **09.05.83 US 493034**

(43) Date of publication of application:
**14.11.84 Bulletin 84/46**

(45) Publication of the grant of the patent:
**13.12.89 Bulletin 89/50**

(84) Designated Contracting States:
**BE DE FR GB IT**

(56) References cited:
**GB-A- 764 463**
**GB-A-2 119 810**
**US-A-2 986 546**

(73) Proprietor: **W.R. Grace & Co.-Conn. (a Connecticut corp.)**
**Grace Plaza 1114 Avenue of the Americas**
**New York New York 10036 (US)**

(72) Inventor: **Shiow, Cing Lin**
**6424 Elffolk Lane**
**Columbia Maryland 21045 (US)**

(74) Representative: **UEXKÜLL & STOLBERG**
**Patentanwälte**
**Beselerstrasse 4**
**D-2000 Hamburg 52 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 124 808 B1**

## Description

1. Field of the Invention

This invention relates to a thermosettable adhesive sealant or coating plastisol dispersion composition which, on heating at or above the fluxing temperature but below the flow temperature of the thermoplast, rapidly provides handling strength and which can be crosslinked to give a thermoset seal, bond or coating on further heating.

The invention also relates to a process for forming a crosslinked bond, seal or coating.

2. Description of Prior Art

In general, a plastisol is composed of a high molecular weight polymer dispersed in a plasticizer which is a material incorporated in a plastic to increase its workability. Upon heating, the plastisol turns to a pregelled dispersion, to a gelled dispersion and then to a fused dispersion. The viscosity of a plastisol decreases with the increase of temperature at the beginning. At a certain temperature, suddenly, the viscosity increases sharply and the liquid dispersion turns to an opaque solid, a gelled dispersion. This temperature is called minimum fluxing temperature defined as the temperature at which a plastisol develops sufficient physical integrity to permit being lifted from the fusion plate. Upon further heating at a higher temperature, the plastisol turns to a clear plasticized plastic.

To prepare a plastisol, two basic ingredients, a high molecular weight polymer powder and a liquid plasticizer, are required to form a stable dispersion after blending. Physically, the plasticization process of a plastisol is the permeation of the plasticizer into the polymer particle to solvate the polymer molecules. The permeation rate (P) depends on the diffusion speed of the plasticizer (D) and the interaction between the plasticizer and the polymer (S):

$$P = D x S$$

Under the assumption that a polymer is compatible with a certain plasticizer, two important factors, the molecular weight (size) and the structure polymer and plasticizer, should contribute to the stability of a plastisol which is determined by the diffusibility of the plasticizer upon aging. A stable dispersion should not allow the diffusion to occur at or below storage temperature. To prevent a plasticizer from diffusing, the size of the plasticizer molecules has to be larger than that of the polymer free volume. Upon heating, the free volume increases with temperature and allows the plasticizer molecule to diffuse into a polymer particle when the temperature is high enough.

Besides the kinetic process of plasticization, the capability of plasticization also depends on thermodynamic parameters. The plasticization should not occur when the free energy of mixing is greater than or equal to zero ($G_m$ = O), even if the size of the plasticizer is as ideal as described above.

Poly(vinyl chloride) and its copolymers, because of their low degradation temperature, eliminate hydrogen chloride and form a colored product below their melting temperature. Therefore, to use a melt process for these polymers without adding a plasticizer is difficult. The invention of plastisol technology has allowed these polymers to have excellent applicability and become the major polymers used in the plastisol industry. Unfortunately, the degradation of these polymers in service conditions is still an unacceptable problem in some applications due to hydrogen chloride elimination which promotes corrosion in metal and a reduction of polymer strength.

To stabilize PVC plastisols in service and to enhance their service life, a crosslinkable, secondary plasticizer has been incorporated with a primary plasticizer for plastisol preparation. The secondary crosslinkable plasticizer includes reactive vinyl compounds such as trimethylolpropane trimethacrylate and tetraethylene glycol dimethacrylate [Dainippon, JP80 52,335 (1980)]; G. F. Cowperthwalte, SPE Journal, *29*, 56, 1973), unsaturated polyesters [Dainippon, JP80 21,474 (1980)]; diallyl compounds [Shin-Nippon Rika, JP72 40,853 (1972)], and epoxy resins [Dunlop, JP81 100,841 (1981)].

To further improve the structural properties and eliminate the problem of hydrogen chloride release of the PVC plastisol, the plastisol technology was extended to acrylic polymers for the preparation of thermally fusible acrylic plastisols. B. Graham DE—A 28 12 016 (1978)] used esters as plasticizers and polyol acrylates as reactive diluents to prepare various reactive acrylic plastisols which formed a plasticized semi-interpenetrating network after crosslinking reactions.

U.S.—A 4,020,966 teaches a plastisol composition containing as a resin component a copolymer of a normal alpha-olefin and maleic anhydride in combination with a reactive polyepoxide plasticizer.

In U.S.—A 4,332,713 a liquid or pasty thermosetting adhesive which can be pregelled is formed from poly(vinyl acetal) powder, dispersed in a liquid epoxy resin, heated above its melting point and, subsequently, cooled to room temperature to form a non-tacky coating. However, the adhesive, which is subsequently cured by heating after the parts are joined together, becomes a liquid again (i.e., no handling strength) since the curing temperature is higher than the melting point of the dry pregelled coating.

This invention concerns the preparation of an ideal reactive plastisol which is a system containing a reactive or non-reactive polymer powder dispersed in a thermosetting plasticizer. The ideal reactive plastisol converts to a fused plastisol at minimum fluxing temperature, turns to a clear plasticized polymer at clear point and changes to a thermoset material after the crosslinking reaction. The characteristics of the

reactive plasticizer thus include: wide compatibility with polymer; low vapor pressure; high plasticization efficiency; excellent aging stability upon storage and crosslinkability upon curing.

This invention particularly concerns a class of reactive plastisols prepared from a polyvinyl acetal thermoplast and a combination of reactive plasticizers. Poly(vinyl acetals), synthesized from poly(vinyl alcohol) and aldehydes, are being used in the laminate industry for making safety glass because of their excellent impact resistance. Poly(vinyl acetals) have also been formulated into one package epoxy systems for coatings, adhesives, laminates and other applications by dissolving the ingredients in organic solvents [Y. Mikogami et al. Eur. Pat. 31,904 (1981)]; Chisso, JP80 06,672 (1980)]; J. V. Crivello, DE—A 27 30 725 (1978)]; A. Sato et al., JP 74 01,461 (1974)]; Hitachi JP81 104,979 (1981)]; M. Naps, U.S.—A 2,986,546 (1961)]; J. N. Schurb, U.S.—A. 3,931,455 (1976)]. The powdered poly(vinyl acetals) have also been blended with a powder solid epoxy resin for a powder coating application [K. Iko et al, JP79 29,338 (1979)]. Furthermore, a mixture of poly(vinyl acetals) and liquid epoxy resin have also been processed into a film for an adhesive application by a melt process which requires heating the material above its melting temperature [T. Kobayashi et al, JP74 126,734 (1974); I. Motoki et al, JP75 20,575 (1975)].

To use the reactive plastisol technology, which is a combination of plastisol and thermosetting technologies, the dispersion fuses into a plasticized solid at a temperature much lower than the melting point. Because the fluxing process is extremely quick, the thermosetting material provides a handling strength or B-stage strength in a few seconds. The final cure can then be made to occur either right after fluxing or by subsequent heating to the cure temperature.

## Objects of the Invention

One object of the instant invention is to produce a novel process and composition. Another object of the instant invention is to produce a plastisol composition which is useful as an adhesive or sealant. Yet another object of the instant invention is to produce a plastisol composition which on curing substantially minimizes or precludes exuding or extraction of the plasticizer. Still another object of the invention is to produce a plastisol composition which on heating to the fluxing temperature acquires handling strength and cures to a thermoset at or above said fluxing temperature. A further object of the instant invention is to produce a process which comprises heating a reactive plastisol composition to at least its fluxing temperature but below the flow temperature of the thermoplast to flux the plastisol and develop handling strength and, thereafter, obtain a thermoset material by heating above its curing temperature. Other objects will become apparent from a reading hereinafter.

## Description of the Invention

This invention relates to a reactive plastisol dispersion composition comprising

(1) 100 parts by weight of at least one polyvinyl acetal thermoplast in powder form, which is insoluble in the plasticizer at room temperature and plasticizable at a temperature at or above fluxing temperature, and which thermoplast has a flow temperature at 70,3 bar of between 100° and 200°C;

(2) 50 to 2,000 parts by weight of a liquid plasticizer comprising an epoxide resin having on average more than one epoxide group in the molecule or a mixture of said epoxide resins in combination with a member of the group consisting of

(a) at least one ethylenically unsaturated monomer, oligomer or prepolymer of the formula:

$$\left(CH_2=\underset{R}{C}-\overset{O}{\overset{\|}{C}}-O-\right)_n R_1$$

wherein R is H or $CH_3$, $R_1$ is an organic moiety and n is 1 or more,

(b) at least one unsaturated polymer containing the group:

$$-\left(R_2O\overset{O}{\overset{\|}{C}}-R_3\overset{O}{\overset{\|}{C}}-O\right)_x-\left(R_2O-\overset{O}{\overset{\|}{C}}-CH=CH-\overset{O}{\overset{\|}{C}}-O\right)_y-$$

wherein $R_2$ and $R_3$ are organic moieties,

x is 0—20 and y is 1—20, and

(c) a mixture of (a) and (b);

(3) 0.5 to 20 parts by weight of a latent curing agent for said epoxide resin, which is inactive in the epoxide resin at room temperature and which is selected from the group consisting of dicyandiamide, melamine, guanamine, polycarboxylic acid polyhydrazides, carboxylic acid imides, imidazole derivatives, $BF_3$ adducts and diaryliodonium salts; and, optionally,

(4) a curing agent for the plasticizer group member comprising a free radical initiator.

The plastisol dispersion after fluxing can form a thermoset sealant, coating or adhesive on exposure to heat.

The plastisol of the invention operates in the same method as conventional plastisols. That is, herein the term "plastisol" refers to dispersions of finely divided thermoplastic resin particles in a liquid nonvolatile plasticizer in which the resin is insoluble and cannot be swollen by the plasticizer at room temperature. However, at elevated temperatures, the resin fluxes, i.e., is substantially completely plasticized by the plasticizer so that a homogeneous, solid solution is obtained which forms a rubbery thermoplastic mass. At this point the plastisol has handling mechanical strength. Further heating at or above the fluxing temperature results in a thermoset material with ultimate structural strength. If only the plasticizer is reactive, it will crosslink to a thermoset and form a semi-interpenetrating network. If the reactive plasticizer reacts with the thermoplast, a crosslinked material results. In addition to the resin thermoplast and the plasticizer, the formulation may also contain latent curing agents, electrically conductive particles, fillers, pigments, stabilizers and various conventional compound ingredients.

The plastisol compositions herein are formed by admixture of 100 parts by weight of the resin particles with 50 to 2,000 parts by weight of plasticizer per 100 parts of resin and 0.5 to 20 parts by weight of a latent thermal initiator. Thereafter, the pasty plastisol admixture is heated at a temperature at or above the fluxing temperature which is lower than the melting point of the thermoplast resin for a time sufficient to plasticize the resin by the plasticizer to obtain a homogeneous, solid solution which is a rubbery mass. The fluxed product and pasty plastisol are both useful as adhesives or sealants. For example, the solid fluxed thermoplastic material can be placed between two adherends and heated at or above a temperature whereat either the thermal initiator decomposes and initiates curing of the plasticizer or the plasticizer, per se, initiates polymerization which results in a cured thermoset adhesive. The pasty plastisol dispersion can also be placed between two adherends and heated at or above the decomposition temperature of the initiator to flux and initiate the polymerization at the same time.

The polyvinyl acetals used as a thermoplast in the instant invention are prepared from aldehydes and polyvinyl alcohols. Polyvinyl alcohols are high molecular weight synthetic resins containing various percentages of hydroxyl and acetate groups produced by hydrolysis of polyinyl acetate. Polyvinyl alcohols are usually classified as partially hydrolyzed (15—30% polyvinyl acetate groups) and completely hydrolyzed (0—5% acetate groups). Both types, in various molecular weight grades, are used in producing commercially available polyvinyl acetals.

The conditions of the acetal reaction and the concentration of the particular aldehyde and polyvinyl alcohol used are closely controlled to form polymers containing predetermined proportions of hydroxyl groups, acetate groups and acetal groups. The final product may be represented by the following stylized structure:

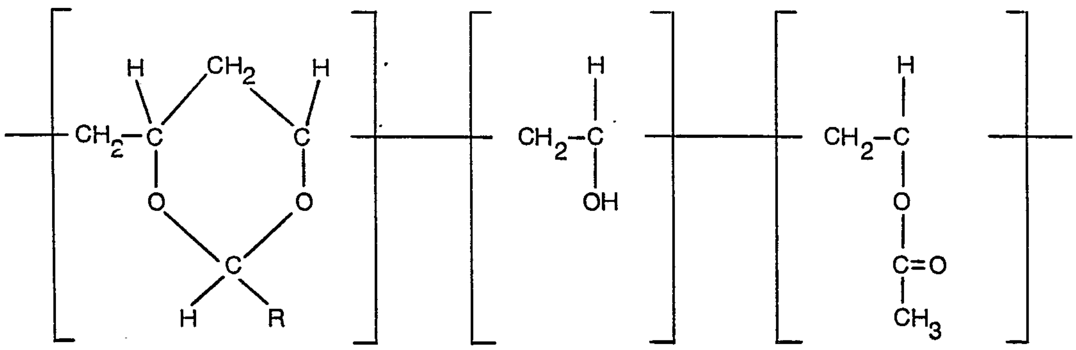

wherein R is H, $C_nH_{2+=1}$ wherein n is 1—10, unsaturated olefin or aryl groups.

The poly(vinyl acetals) may be made either from poly(vinyl alcohol) or directly from poly(vinyl acetate) without separating the alcohol. The two most widely used polyvinyl acetals are polyvinyl formal and polyvinyl butyral.

In the preparation of polyvinyl formal the direct process is normally used. That is, in a typical process, 100 parts of polyvinyl acetate are added a mixture of 200 parts acetic acid and 70 parts water, which has been warmed to about 70°C and stirred to complete solution. 60 parts 40% formalin and 4 parts of sulfuric acid (catalyst) are added and the reaction is carried out for 24 hours at 70°C. Water is added to the mixture with rapid agitation to precipitate the granules which are then washed free from acid and dried. Commercially available polyvinyl formal can have weight average molecular weights ranging from about 10,000 to about 40,000, a hydroxyl content expressed as percent polyvinyl alcohol ranging from 5.0 to 7.0, an acetate content expressed as percent polyvinyl acetate ranging from 9.5 to 30% and a formal content expressed as percent polyvinyl formal ranging from 68 to 82%.

In a typical process for forming polyvinyl butyral, 140 parts of fully hydrolyzed polyvinyl alcohol are suspended in 800 parts of ethanol. 80 parts of butyraldehyde and 8 parts of sulfuric acid are added and the reaction is carried out at about 80°C for 5 to 6 hours. The solution of polyvinyl butyral is diluted with methanol and the polymer precipitated by the addition of water during vigorous agitation. The polymer is then stabilized, washed and dried. Commercially available polyvinyl butyrals have weight average molecular weights ranging from 30,000 to 270,000, a hydroxyl content ranging from 9 to 21%, an acetate content ranging from 0 to 2.5% and a butyral content from 80 to 88%. Although these two polyvinyl acetates are the most widely used because of their commercial availability, other polyvinyl acetals such as polyvinyl propional, polyvinyl acetal and polyvinyl benzal are also operable herein.

The polyvinyl acetal resin component of this invention is not restricted to any particular type of polyvinyl acetal resin. It may be made in accordance with conventional methods from polyvinyl acetate by a hydrolysis reaction followed by reaction with an aldehyde to form the acetal. Such methods are disclosed, for example, in U.S. Patent 2,307,588. Generally, polyvinyl acetal resins are made with the lower aldehydes, such as formaldehyde, acetaldehyde and butyraldehyde. Preferred as the polyvinyl acetal resin component of this invention is polyvinyl formal since it gives an adhesive of great toughness and heat resistance.

In order to avoid ambiguity in terminology of the acetal resins, the term "polyvinyl acetal resin" will be used to describe all the resins made from lower aldehydes. When it is desired to designate the polyvinyl acetal resin that is made from acetaldehyde, the sub-generic term "polyvinyl acetal from acetaldehyde" will be used. The other specific polyvinyl acetal resins will be called by their conventional names. For example, the polyvinyl acetal resin made from the aldehyde formaldehyde will be called simply polyvinyl formal.

The polyvinyl acetal particles used herein have a particle size in the range from about 0.1 to about 1,500 μm and flow temperatures at 70.3 bar in the range 100—200°C.

The epoxy resin to be used in the composition of the invention comprises those materials possessing more than one epoxy, i.e.,

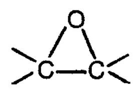

group. These compounds may be saturated or unsaturated, aliphatic, cycloaliphatic, aromatic or heterocyclic and may be substituted with substituents, such as chlorine, hydroxyl groups, ether radicals and the like.

The term "epoxy resin" when used herein and in the appended claims contemplates any of the conventional monomeric, dimeric, oligomeric or polymeric epoxy materials containing a plurality, more than one, e.g., 1.1, epoxy functional groups. Preferably, they will be members of classes described chemically as (a) an epoxidic ester having two epoxycycloalkyl groups; (b) an epoxy resin prepolymer consisting predominately of the monomeric diglycidyl ether of bisphenol-A; (c) a polyepoxidized phenol novolak or cresol novolak; (d) a polyglycidyl ether of a polyhydric alcohol; (e) diepoxide of a cycloalkyl or alkylcycloalkyl hydrocarbon or ether; or (f) a mixture of any of the foregoing. To save unnecessarily detailed description, reference is made to the Encyclopedia of Polymer Science and Technology, Vol. 6, 1967, Interscience Publishers, New York, pages 209—271.

Suitable commercially available epoxidic esters are preferably, 3,4-epoxycyclohexylmethyl 3,4-epoxycyclohexanecarboxylate (Union Cabide ERL 4221, Ciba Geigy CY—179); as well as bis(3,4-epoxy-6-methylcyclohexylmethyl)adipate (Union Carbide ERL 4289); and bis(3,4-epoxycyclohexylmethyl)adipate (Union Carbide ERL 4299).

Suitable commercially available diglycidyl ethers of bisphenol-A are Ciba Geigy Araldite® 6010, Dow Chemical DER 331, and Shell Chemical Epon® 828 and 826.

A polyepoxidized phenol formaldehyde novolak prepolymer is available from Dow Chemical DEN 431 and 438, and a polyepoxidized cresol formaldehyde novolak prepolymer is available from Ciba-Geigy Araldite 538.

A polyglycidyl ether of a polyhydric alcohol is available from Ciba Geigy, based on butane-1,4-diol, Araldite RD-2; and from Shell Chemical Corp., based on glycerine, Epon 812.

A suitable diepoxide of an alkylcycloalkyl hydrocarbon is vinyl cyclohexene dioxide, Union Carbide ERL 4206.

Other examples include the epoxidized esters of the polyethylenically unsaturated monocarboxylic acids, such as epoxidized linseed, soybean, perilla, oiticica, tung, walnut and dehydrated castor oil, methyl linoleate, butyl linoleate, ethyl 9,12-octadecadienoate, butyl 9,12,15-octadecatrienoate, butyl eleostearate, monoglycerides of tung oil fatty acids, monoglycerides of soybean oil, sunflower, rapeseed, hempseed, sardine, cottonseed oil and the like.

In the instance when a portion of the reactive plasticizer is an acrylate, i.e., an acrylate terminated polyene, of the formula:

$$(CH_2{=}\underset{R}{C}{-}\overset{O}{\overset{\|}{C}}{-}O\!\!-\!\!)_n R_1$$

wherein R is H or $CH_3$, $R_1$ is an organic moiety and n is 1 or more, the compound can be made by various reactants and methods. One of these acrylate terminated materials is a polyether polyol urethane polyacrylate formed by reacting a polyether polyol with a polyisocyanate and end-capped with a hydroxyalkyl acrylate. Another material may be a polyester polyol urethane polyarylate formed by reacting a polyester polyol with a polyisocyanate and end-capped with a hydroxyalkyl acrylate. Still another material in this category is an epoxy acrylate formed by reacting a diepoxide with acrylic acid. Acrylate or methacrylate ester of an epoxy resin used herein are commercially available materials. One of such materials is Shell Co.'s Epocryl® Resin-370 having the idealized structure:

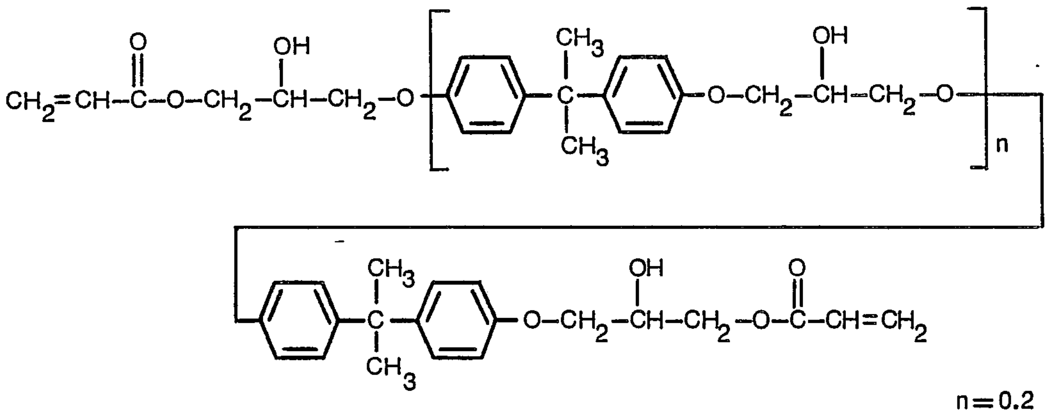

n=0.2

This material has a viscosity of 9000 dPa s at 25°C and contains 0.02 equivalents epoxide/100 g. The material is formed from the reaction of one mole of diglycidyl ether of bisphenol A reacted with two moles of acrylic acid.

Aside from substituted and unsubstituted acrylic acid being used to form the compound herein, hydroxyalkyl acrylate half esters of oxalic, malonic, succinic, glutaric, adipic, pimelic, suberic, azelaic, sebacic, phthalic, terephthalic, isophthalic acid and mixtures thereof are also operable. Thus, a generalized reaction for forming substituted or unsubstituted acrylate esters of an epoxy resin is as follows:

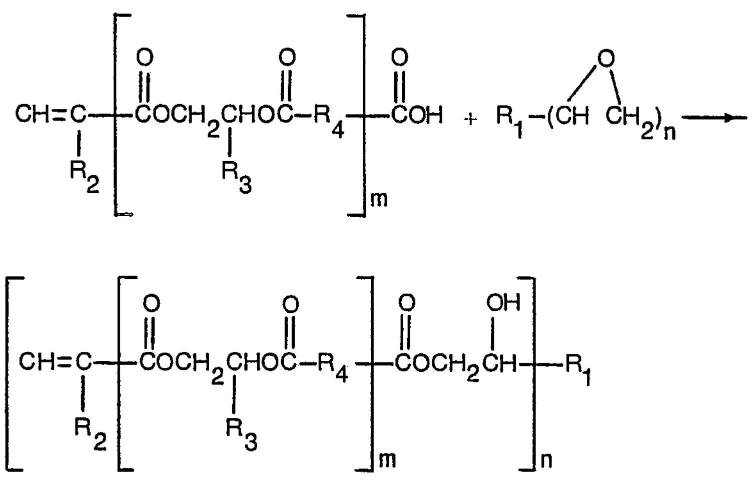

I

wherein m is 0 or 1; n is 1 to 4; $R_2$ and $R_3$ are H or $CH_3$; $R_4$ is

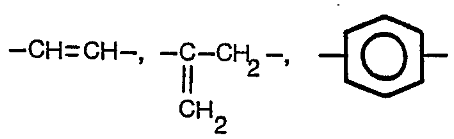

or $-(CH_2)_p$;

p is 0 to 6 and $R_1$ is an organic moiety with the valence of n. Examples of acrylate terminated polyenes operable herein include, but are not limited to, 1,3-butylene glycol diacrylate, diethylene glycol diacrylate, 1,6-hexanediol diacrylate, neopentyl glycol diacrylate, polyethylene glycol 200 diacrylate, tetraethylene glycol diacrylate, triethylene glycol diacrylate, pentaerythritol tetraacrylate, tripropylene glycol diacrylate, ethoxylated bisphenol-A diacrylate, trimethylolpropane triacrylate, di-trimethylol propane tetraacrylate, triacrylate of tris(hydroxyethyl)-isocyanate, dipentaerythritol hydroxyphentacrylate, pentaerythritol triacrylate, ethoxylated trimethylolpropane triacrylate, triethylene glycol dimethacrylate, ethylene glycol dimethacrylate, tetraethylene glycol dimethacrylate, polyethylene glycol-200 dimethacrylate, 1,6-hexanediol dimethacrylate, neopentyl glycol dimethacrylate, polyethylene glycol-600 dimethacrylate, 1,3-butylene glycol dimethacrylate, ethoxylated bisphenol-A dimethacrylate, trimethylolpropane trimethacrylate, diethylene glycol dimethacrylate, 1,4-butanediol diacrylate, diethylene glycol dimethacrylate, pentaerythritol tetramethacrylate, glycerin dimethacrylate, trimethylolpropane dimethacrylate, pentaerylthritol trimethacrylate, pentaerythritol dimethacrylate and pentaerythritol

diacrylate. Monoacrylates such as n-hexyl methacrylate, cyclohexyl methacrylate and tetrahydrofurfuryl methacrylate are also operable as reactive plasticizers herein. Mixtures of the acrylate terminated polyenes with each other or with the unsaturated polyester plasticizers of the instant invention are also operable in weight ratios of 1 to 99 to 99 to 1.

The acrylate terminated polyenes are admixed with the epoxy resin in amounts ranging from 2 to 95, preferably 5 to 50% by weight of the plasticizer.

In the case where the reactive plasticizer is an unsaturated polyester, conventional unsaturated polyesters can be used, such as those described in Kirk-Othmer, Encyclopedia of Chemical Technology, 2nd Ed., Vol. 2, pp. 791—839. That is, conventional unsaturated polyesters operable herein are a class of soluble, linear, low molecular weight macromolecules which contain both carboxylic ester groups and carbon-carbon double bonds as recurring units along the main chain. These resins are usually prepared by condensation of (a) ethylenically unsaturated dicarboxylic acids or anhydrides to impart the unsaturation, (b) saturated dicarboxylic acids to modify the resin and (c) diols. They are represented by the structural formula:

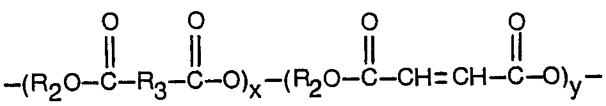

wherein $R_2$ and $R_3$ are alkylene or arylene radicals in the diol and saturated acid respectively, and x and y are variable numbers which depend upon the composition and condensation conditions. Polyester alkyds can be diluted to a fluid state with methacrylates or other vinyl monomers. These mixtures are capable of very rapid copolymerization to produce strong solids. This free-radical-initiated reaction proceeds via an addition mechanism involving the double bonds of both materials and leads to formation of a highly crosslinked structure.

The diol can be propylene glycol, dipropylene glycol, diethylene glycol, polypropylene glycol, polycaprolactone diol, butandiol polybutylene glycol or mixtures of glycols. When maleic anhydride is used, care must be paid to ensure isomerization of the maleate to fumarate. Maleate can be isomerized to fumarate catalytically or by application of heat. however, use of isomerization catalysts can lead to crosslinking or other undesirable effects on the product. Fortunately, the polyesterification reaction is normally carried out at 200°C or slightly higher, and at these temperatures isomerization is concurrent with polyesterification. Typical polyester cook times range from 6 to 16 hours at temperatures from 180°C to as high as 230°C. Reaction temperatures much above 220°C can be detrimental, leading to side reactions and poor color of the product.

Generally, substitution of fumarate for maleate as the unsaturated portion leads to higher flexural strength and modulus, higher hardness values, higher heat distortion temperatures and better chemical resistance in the cured systems. However, faster polymerization rates are also obtained. These differences can be equated to a higher crosslink density from the fumarate unsaturation.

Acid catalysts such as sulfuric acid or p-toluene-sulfonic acid increase the rate of both esterification and isomerization, but usually cause color formation and other detrimental side reactions. For this reason catalysts are generally not used in high-temperature reactions. However, metal salts or organometallic compounds are used as catalysts for direct esterification. Numerous metal salts have been used for catalysts action including, but not limited to, tetrabutyl or tetraoctyl titanate or zirconate or stannous oxalate in combination with sodium and zinc acetates.

The unsaturated polyesters are admixed with the epoxy resin in amounts ranging from 1 to 95, preferably 5 to 35% by weight of the plasticizer.

The addition of the acrylate terminated polyene, polyester or combination thereof to the plasticizer yields greatly improved handling strength on fluxing as will be shown in examples hereinafter.

The thermal initiators used herein for curing the acrylate terminated polyene or the polyester portion of the reactive plasticizer are free radical initiators selected from substituted or unsubstituted pinacols, azo compounds, thiurams, organic peroxides and mixtures thereof.

The organic peroxides operable are of the general formula:

$$R—O—O—(R_1—O—O)_n—R$$

wherein n = 0 or 1, R is independently selected from hydrogen, aryl, alkyl, aryl carbonyl, alkaryl carbonyl, aralkyl carbonyl and alkyl carbonyl and $R_1$ is alkyl or aryl, said alkyl groups containing 1 to 20 carbon atoms.

Examples of operable organic peroxides include, but are not limited to 2,5-dimethyl-2,5-di(t-butylperoxy)hexane, 1,3-bis(t-butylperoxyisopropyl)benzene, 1,3-bis(cumylperoxyisopropyl)benzene, 2,4-dichlorobenzoyl peroxide, caprylyl peroxide, lauroyl peroxide, t-butyl peroxyisobutyrate, benzoyl peroxide, p-chlorobenzoyl peroxide, hydroxyheptyl peroxide, di-t-butyl diperphthalate, t-butyl peracetate, t-butyl perbenzoate, dicumyl peroxide, 1,1-di(t-butylperoxy)-3,3,5-trimethyl-cyclohexane and di-t-butyl peroxide.

The organic peroxide is added to the composition in an amount ranging from 0.01—10%, preferably 0.1—5%, by weight based on the weight of the acrylate terminated polyene and/or polyester portion of the reactive plasticizer.

Examples of azo compounds operable herein include, but are not limited to, commercially available compounds such as 2-t-butylazo-2-cyanopropane; 2,2′-azobis-(2,4-dimethyl-4-methoxy-valeronitrile); 2,2′-azobis-(isobutyronitrile); 2,2′-azobis(2,4-dimethylvaleronitrile) and 1,1′-azobis(cyclohexanecarbonitrile).

The azo compound is added to the composition in an amount ranging from 0.001—5%, preferably 0.01—2% by weight based on the weight of the acrylate terminated polyene and/or polyester portion of the reactive plasticizer.

The thiurams operable as thermal initiators herein are of the formula

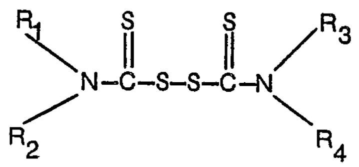

wherein $R_1$, $R_2$, $R_3$ and $R_4$ taken singly can be hydrogen, linear or branched alkyl having from 1 to about 12 carbon atoms, linear or branched alkenyl having from 2 to about 12 carbon atoms, cycloalkyl having from 3 to about 10 ring carbon atoms, cycloalkenyl having from 3 to about 10 ring carbon atoms, aryl having from 6 to about 12 ring carbon atoms, alkaryl having from 6 to about 12 ring carbon atoms, aralkyl having from 6 to about 12 ring carbon atoms and, when taken together, $R_1$ and $R_2$ and $R_3$ and $R_4$ can be a divalent alkylene group $-(C_nH_{2n})-$ having from 2 to about 12 carbon atoms, a divalent alkenylene group $-(C_nH_{2n-2})-$ group having from 3 to about 10 carbon atoms, a divalent alkadienylene group $-(C_nH_{2n-4})-$ having from 5 to about 10 carbon atoms, a divalent alkatrienylene group $-(C_nH_{2n-6})-$ having from 5 to about 10 carbon atoms, a divalent alkyleneoxyalkylene group $-(C_xH_{2x}OC_xH_{2x})-$ having a total of from 4 to about 12 carbon atoms or a divalent alkyleneaminoalkylene group:

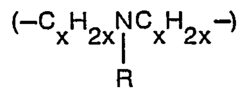

having a total of from 4 to about 12 carbon atoms.

Operable thiurams include, but are not limited to, tetramethylthiuram disulfide, tetraethylthiuram disulfide, di-N-pentamethylenethiuram disulfide, tetrabutylthiuram disulfide, diphenyldimethylthiuram disulfide, diphenyldiethylthiuram disulfide and diethyleneoxythiuram disulfide and the like.

The thiuram is added to the composition in an amount ranging from 0.005—5.0% by weight of the acrylate terminated polyene and/or polyester portion of the reactive plasticizer.

The substituted or unsubstituted pinacols operable herein as a thermal initiator have the general formula:

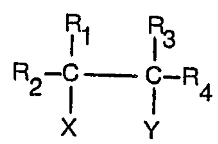

wherein $R_1$ and $R_3$ are the same or different substituted or unsubstituted aromatic radicals, $R_2$ and $R_4$ are substituted or unsubstituted aliphatic or aromatic radicals and X and Y which may be the same or different are hydroxyl, alkoxy or aryloxy.

Preferred pinacols are those wherein $R_1$, $R_2$, $R_3$ and $R_4$ are aromatic radical, especially phenyl radical and X and Y are hydroxyl.

Examples of this class of compounds include, but are not limited to, benzopinacol, 4,4′-dichlorobenzopinacol, 4,4′-dibromobenzopinacol, 4,4′-diiodobenzopinacol, 4,4′,4″,4‴-tetrachlorobenzopinacol, 2,4-2′,4′-tetrachlorobenzopinacol, 4,4′-dimethylbenzopinacol, 3,3′-dimethylbenzopinacol, 2,2′-dimethylbenzopinacol, 3,4-3′,4′-tetramethylbenzopinacol, 4,4′-dimethoxybenzopinacol, 4,4′, 4″,4‴-tetramethoxybenzopinacol, 4,4′-diphenylbenzopinacol, 4,4′-dichloro-4″,4‴-dimethylbenzopinacol, 4,4′-dimethyl-4″,4‴-diphenylbenzopinacol, xanthonpinacol, fluorenonepinacol, acetophenonepinacol, 4,4′-dimethylacetophenone-pinacol, 4,4′-dichloroacetophenonepinacol, 1,1,2-triphenyl-propane-1,2-diol, 1,2,3,4-tetraphenylbutane-2,3-diol, 1,2-diphenylcyclobutane-1,2-diol, propiophenone-pinacol, 4,4′-dimethylpropiophenonepinacol, 2,2′-ethyl-3,3′-dimethoxypropiophenone-pinacol, 1,1,1,4,4,4-hexafluoro-2,3-diphenylbutane-2,3-diol.

As further compounds according to the present invention, there may be mentioned: benzopinacol-mono methylether, benzopinacol-mono-phenylether, benzopinacol and monoisopropyl ether, benzopinacol monoisobutyl ether, benzopinacol mono (diethoxy methyl) ether and the like.

The pinacol is added to the composition in amounts ranging from 0.01—10%, preferably 0.1—5%, by weight based on the weight of the acrylate terminated polyene and/or polyester portion of the reactive plasticizer.

The thermal initiators employed for the epoxy resin are thermal initiators selected from dicyandiamide, melamine, guanamine, polycarboxylic acid polyhydrazides, carboxylic acid imides, imidazole derivatives, $BF_3$ adducts and diaryliodonium salts.

The $BF_3$ adducts used herein as thermal initiators include, but are not limited to, $C_6H_5NH_2 \cdot BF_3$, 2,6-$Et_2C_6H_3NH_2 \cdot BF_3$, $EtNH_2 \cdot BF_3$, sec-$Bu_2NH \cdot BF_3$, $Et_2NH \cdot BF_3$, $(C_6H_5)_3P \cdot BF_3$, $C_6H_5NMe_2 \cdot BF_3$, Pyridine$\cdot BF_3$ and $Et_3N \cdot BF_3$, $Et_2O \cdot BF_3$, $(HOCH_2CH_2)_3N \cdot BF_3$ and the like.

The diaryliodonium salts operable herein as thermal initiators those set out in U.S.—A 4,238,587. That is, the diaryliodonium salt which can be utilized in the practice of the invention are shown as follows:

$$[(R)_a(R^1)_bI]^+[Y]^-, \qquad (1)$$

where R is a $C_{(6-13)}$ aromatic hydrocarbon radical, $R^1$ is a divalent aromatic organic radical, and Y is an anion, a is equal to 0 or 2, b is equal to 0 or 1 and the sum of a + b is equal to 1 or 2. Preferably, Y is an $MQ_d$ anion where M is a metal or metalloid, Q is a halogen radical and d is an integer equal to 4—6.

Radicals included within R of formula (1) can be the same or different aromatic carbocyclic radicals having from 6 to 20 carbon atoms, which can be substituted with from 1 to 4 monovalent radicals selected from $C_{(1-8)}$alkoxy, $C_{(1-8)}$ alkyl, nitro, chloro, etc. R is more particularly phenyl, chlorophenyl, nitrophenyl, methoxyphenyl, pyridyl, etc. Radicals included by $R^1$ of formula (1) are divalent radicals such as

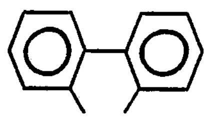 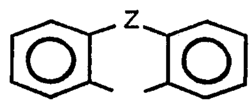

where Z is selected from

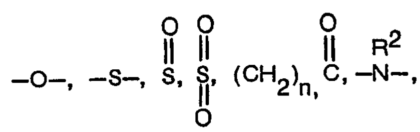

$R^2$ is $C_{(1-8)}$alkyl or $C_{(1-8)}$aryl, and n is an integer equal to 1—8 inclusive.

Metals or metalloids included by M of formula (1) are transition metals such as Sb, Fe, Sn, Bi, Al, Ga, In, Ti, Zr, Sc, V, Cr, Mn, Cs, rare earth elements such as the lanthanides, for example, Cd, Pr, Nd, etc., actinides, such as Th, Pa, U, Np, etc., and metalloids such as B, P, As, Sb, etc. Complex anions included by $MQ_d$ are, for example, $BF_4^-$, $PF_6^-$, $AsF_6^-$, $SbF_6^-$, $FeCl_4^-$, $SnCl_6^-$, $SbCl_6^-$, $BiCl_5^{--}$, etc.

Some of the diaryliodonium salts which can be used in the practice of the invention are as follows:

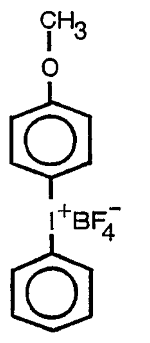 , 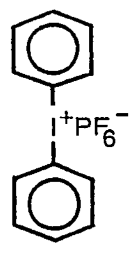 ,

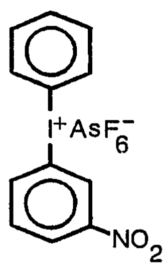 , 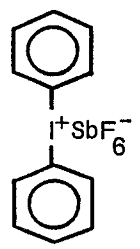 ,

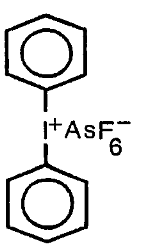 , 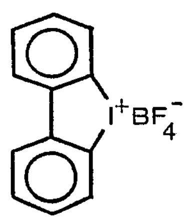 , etc.

These thermal initiators are added to the system in an amount ranging from 1 to 10% by weight of the epoxy resin.

Accelerators for the epoxy resin thermal initiators such as monuron, chlorotoluron and similar substances are also operable and can be added in amounts ranging from 0.1 to 10 parts by weight of the epoxy resin plasticizer.

In practicing the invention, it is sometimes possible to use a thermal initiator for curing the plasticizer which decomposes at a temperature lower than the fluxing temperature of the plastisol, especially when the composition is quickly heated to the fluxing temperature. This is due to the fact that the fluxing rate is much faster than the curing rate at the fluxing temperature. Thus, one can heat quickly to the fluxing temperature, flux the plastisol and cool down below the decomposition temperature of the thermal initiator before curing occurs, thereby obtaining a thermoplastic plastisol ready to be cured to a thermoset adhesive on reheating.

The heating step to cure the fluxed solid plastisol is usually carried out for a period of 10 seconds to 30 minutes at a temperature of 100—300°C, preferably 120—200°C which is sufficient to fully cure the composition to a solid thermoset adhesive, coating or sealant product.

The heating step using a thermal initiator to cure the fluxed plastisol resin composition can be accomplished in several ways. In simple systems, the adhesive composition can be applied by manual means to an adherend, contacted with another adherend and the assembled system heated in a forced air oven until a thermoset bond results.

Additionally and preferably, electromagnetic heating can be utilized as a faster and more efficient means of curing, especially where the substrates to be bonded are plastic materials. In addition to the formation of high strength bonds, electromagnetic bonding techniques aid in (a) fast bond setting times, and (b) automated part handling and assembly.

In practicing the instant invention, electromagnetic heating can be employed with the adhesive composition herein to adhere (1) plastic to plastic, (2) plastic to metal and (3) metal to metal. For example, dielectric heating can be used to bond (1) and (2) supra if the adhesive composition contains sufficient polar groups to heat the composition rapidly and allow it to bond the adherends. Inductive heating can also be used to bond (1), (2) and (3). That is, when at least one of the adherends is an electrically conductive or ferromagnetic metal, the heat generated therein is conveyed by conductance to the adhesive composition thereby initiating the cure to form a thermoset adhesive. In the instance where both adherends are plastic, it is necessary to add an energy absorbing material, i.e., an electrically conductive or ferromagnetic material, preferably in fiber or particle form (10—400 mesh) to the adhesive composition. The energy absorbing material is usually added in amounts ranging from 0.1 to 2 parts by weight, per 1 part by weight of the adhesive plastisol resin composition prior to fluxing. It is also possible to impregnate the plastic adherend at the bonding joint with particles of the energy absorbing material in order to use inductive heating, but care must be exercised that the plastic is not distorted.

The particulate electromagnetic energy absorbing material used in the adhesive composition when induction heating is employed can be one of the magnetizable metals including iron, cobalt and nickel or magnetizable alloys or oxides of nickel and iron and nickel and chromium and iron oxide. These metals and alloys have high Curie points (388°—1116°C).

Electrically conductive materials operable herein when inductive heating is employed include, but are not limited to, the noble metals, copper, aluminum, nickel, zinc as well as carbon black, graphite and inorganic oxides.

There are two forms of high frequency heating operable herein, the choice of which is determined by the material to be adhered. The major distinction is whether or not the material is a conductor or non-conductor of electrical current. If the material is a conductor, such as iron or steel, then the inductive method is used. If the material is an insulator, such as wood, paper, textiles, synthetic resins, rubber, etc., then dielectric heating can also be employed.

Most naturally occurring and synthetic polymers are non-conductors and, therefore, are suitable for dielectric heating. These polymers may contain a variety of dipoles and ions which orient in an electric field and rotate to maintain their alignment with the field when the field oscillates. The polar groups may be incorporated into the polymer backbone or can be pendant side groups, additives, extenders, pigments, etc. For example, as additives, lossy fillers such as carbon black at a one percent level can be used to increase the dielectric response of the plastisol adhesive. When the polarity of the electric field is reversed millions of times per second, the resulting high frequency of the polar units generates heat within the material.

The uniqueness of dielectric heating is in its uniformity, rapidity, specificity and efficiency. Most plastic heating processes such as conductive, convective or infrared heating are surface-heating processes which need to establish a temperature within the plastic by subsequently transferring the heat to the bulk of the plastic by conduction. Hence, heating of plastics by these methods is a relatively slow process with a nonuniform temperature resulting in overheating of the surfaces. By contrast, dielectric heating generates the heat within the material and is therefore uniform and rapid, eliminating the need for conductive heat transfer. In the dielectric heating system herein the electrical frequency of the electromagnetic field is in the range 1—3,000 megahertz, said field being generated from a power source of 0.5—1,000 kilowatts.

Induction heating is similar, but not identical, to dielectric heating. The following differences exist:

(a) magnetic properties are substituted for dielectric properties; (b) a coil is employed to couple the load rather than electrodes or plates; and (c) induction heaters couple maximum current to the load. The generation of heat by induction operates through the rising and falling of a magnetic field around a conductor with each reversal of an alternating current source. The practical employment of such field is generally accomplished by proper placement of a conductive coil. When another electrically conductive material is exposed to the field, induced current can be created. These induced currents can be in the form of random or "eddy" currents which result in the generation of heat. Materials which are both magnetizable and conductive generate heat more readily than materials which are only conductive. The heat generated as a result of the magnetic component is the result of hysteresis or work done in rotating magnetizable molecules and as a result of eddy current flow. Polyolefins and other plastics are neither magnetic nor conductive in their natural states. Therefore, they do not, in themselves, create heat as a result of induction.

The use of the electromagnetic induction heating method for adhesive bonding of plastic structures has proved feasible by interposing selected electromagnetic energy absorbing materials in an independent adhesive composition layer or gasket conforming to the surfaces to be bonded, electromagnetic energy passing through the adjacent plastic structures (free of such energy absorbing materials) is readily concentrated and absorbed in the adhesive composition by such energy absorbing materials thereby rapidly initiating cure of the adhesive plastisol composition to a thermoset adhesive.

Electromagnetic energy absorbing materials of various types have been used in the electromagnetic induction heating technique for some time. For instance, inorganic oxides and powdered metals have been incorporated in bond layers and subjected to electromagnetic radiation. In each instance, the type of energy source influences the selection of energy absorbing material. Where the energy absorbing material is comprised of finely divided particles having ferromagnetic properties and such particles are effectively insulated from each other by particle containing nonconducting matrix material, the heating effect is substantially confined to that resulting from the effects of hysteresis. Consequently, heating is limited to the "Curie" temperature of the ferromagnetic material or the temperature at which the magnetic properties of such material cease to exist.

The electromagnetic adhesive composition of this invention may take the form of an extruded ribbon or tape, a molded gasket or cast sheet. In liquid form it may be applied by brush to surfaces to be bonded or may be sprayed on or used as a dip coating for such surfaces.

The foregoing adhesive plastisol composition, when properly utilized as described hereinafter, results in a one component, solvent free bonding system which permits the joining of metal or plastic items without costly surface pretreatment. The electromagnetically induced bonding reaction occurs rapidly and is adaptable to automated fabrication techniques and equipment.

To accomplish the establishment of a concentrated and specifically located heat zone by induction heating for bonding in accordance with the invention, it has been found that the electromagnetic adhesive plastisol compositions described above can be activated and a bond created by an induction heating system operating with an electrical frequency of the electromagnetic field of from about 5 to about 30 megacycles and preferably from about 15 to 30 megacycles, said field being generated from a power source of from about 1 to about 30 kilowatts, and preferably from about 2 to about 5 kilowatts. The electromagnetic field is applied to the articles to be bonded for a period of time of less than about 2 minutes.

As heretofore mentioned, the electromagnetic induction bonding system and improved electromagnetic adhesive compositions of the present invention are applicable to the bonding of metals, thermoplastic and thermoset material, including fiber reinforced thermoset material.

The following examples will help to explain but expressly not limit, the instant invention as claimed. Unless otherwise noted, all parts and percentages are by weight.

The lap shear strengths of the adhesives were measured on an Instron Tensile Tester using the method set out in ASTM D—1002.

### Example 1

3 g of polyvinyl formal having a flow temperature at 70.3 bar of 160—170°C (1,000 µm particle size Formvar 15/95E from Monsanto) and 0.4 g of dicyandiamide were dispersed in 7 g of diglycidyl ether of bisphenol-A Epon-828 from Shell). This dispersion was applied between two overlapped steel substrates and fluxed at 140°C for 10 minutes. The sample had a handling lap shear strength of 6.82 $N/mm^1$ at room temperature. After curing at 170°C for 30 minutes, the overlapped sample developed a lap shear strength of 21.8 $N/mm^2$ at room temperature.

### Example 2

The dispersion from Example 1 was applied between two overlapped fiber reinforced polyester (SMC) substrates and fluxed at 140°C for 10 minutes. A handling lap shear strength at 2.04 $N/mm^2$ was obtained at room temperature. After curing at 170°C for 30 minutes, a structural lap shear strength of 4.36 $N/mm^2$ measured at room temperature was obtained.

Examples 3, 4 and 5

By replacing part of Epon-828 with varying amounts of Epocryl®-12 (a methacrylate of Epon—828, commercially available from Shell) and using the dispersions as adhesives, as in Examples 1 and 2, a significant improvement in lap shear strength after fluxing the sample at 140°C for 10 minutes was obtained.

Additionally, the dispersions of Examples 1 and 2 and 3, 4 and 5 per se were formed into a plate between 2 pieces of release paper and fluxed by heating at 140°C for 10 minutes. A fluxed, rubbery product resulted in all cases. 4 samples of each of the fluxed products were measured for mechanical strength, i.e., tensile modulus (N/mm$^2$) tensile stress (N/mm$^2$) and percent elongation.

The lap shear strength of the adhesives after fluxing and curing and the mechanical strength of the fluxed material per se of the various dispersions in Examples 1 and 2 and 3, 4 and 5 are shown in Table I:

TABLE I

| Example | 1 and 2 | 3 | 4 | 5 |
|---|---|---|---|---|
| Formvar 15/95E | 30 | 30 | 30 | 30 |
| Epon-828 | 70 | 62.5 | 55 | 475 |
| Epocryl-12 | — | 7.5 | 15 | 22.5 |
| Dicyandiamide | 4.2 | 3.8 | 3.3 | 2.9 |
| Benzopinacol | — | 0.3 | 0.6 | 0.9 |
| Lap Shear (N/mm$^2$) for Steel Substrate | | | | |
| After fluxing[a] | 1.55 | 16.8 | 17.79 | 14.91 |
| After curing [b] | 21.8 | 18.28 | 15.47 | 12.16 |
| Lap Shear (N/mm$^2$) for SMC Substrate | | | | |
| After fluxing[a] | 2.04 | 2.67 | 2.67 | 2.88 |
| After curing [b] | 4.36 | 3.73 | 4.01 | Substrate Failure |
| Mechanical strength of dispersion per se | | | | |
| Tensile modulus (N/mm$^2$) | 2.39 | 27.63 | 133.5 | 1047.6 |
| Tensile stress (N/mm$^2$) | 2.18 | 4.22 | 4.77 | 85.78 |
| Elongation (%) | 284 | 164 | 104 | 1.18 |

(a) 140°C for 10 minutes
(b) 170°C for 30 minutes.

Example 6

The dispersion from Example 1 was also used to evaluate how the handling strength of the reactive plastisol per se changes at various fluxing temperatures. Table II summarizes the handling strength of the dispersion after being fluxed at various temperatures for 10 minutes:

TABLE II

| Heating Temperature (°C) | 100 | 110 | 120 | 130 | 140 |
|---|---|---|---|---|---|
| Handling Lap Shear (N/mm$^2$) | 0.56 | 0.7 | 1.05 | 1.27 | 6.82 |

Example 7

The dispersion from Example 1 was applied between two steel substrates having a 3.21 cm$^2$ overlapping area. The sample was fluxed using an inductive heater manufactured by Cycle-Dyne having 3 kw of power output. At 32% of power load, the dispersion was fluxed in 2 seconds to provide a handling lap shear strength of 10.55 N/mm$^2$ measured at room temperature. This fluxed adhesive developed a structural lap shear of 25.31 N/mm$^2$ after further curing in an oven at 170°C for 30 minutes.

Example 8

1.5 g of an unsaturated polyester, Dion®-6694GA from Koppers, was dissolved in 5.5 g of Epon-828. Into this solution, 3.0 g of Formvar-15/95E, 0.3 g of dicyandiamide and 0.06 g of benzopinacol were dispersed. Using this dispersion as an adhesive (889 μm thickness) for cold roll steel substrates, having a 6.45 $cm^2$ overlap, a handling lap shear strength of 2.18 $N/mm^2$ was obtained after fluxing at 140°C for 10 minutes. Similarly, this dispersion also provided 1.76 $N/mm^2$ of handling lap shear strength to SMC at the same fluxing conditions.

Example 9

Into a solution containing 0.9 g of an unsaturated polyester (Dion-6694GA), 0.9 g of tetraethyleneglycol dimethacrylate and 5.2 g of Epon-828 were dispersed 3 g of Formvar-15/95E, 0.3 g of dicyandiamide and 0.1 g of benzopinacol. The dispersion was used as an adhesive (889 μm thickness in a 6.45 $cm^2$ overlap) for steel and SMC. After fluxing at 140°C for 10 minutes, the dispersion provided a handling lap shear strength of 6.05 $N/mm^2$ and 2.11 $N/mm^2$ to SMC.

**Claims**

1. A reactive plastisol dispersion composition comprising

(1) 100 parts by weight of at least one polyvinyl acetal thermoplastic in powder form, which is insoluble in the plasticizer at room temperature and plasticizable at a temperature at or above fluxing temperature and which thermoplast has a flow temperature at 70.3 bar between 100° and 200°C;

(2) 50 to 2000 parts by weight of a liquid plasticizer comprising an epoxide resin having an average more than one epoxide group in the molecule or a mixture of said epoxide resins in combination with a member of the group consisting of

(a) at least one ethylenically unsaturated monomer, oligomer or prepolymer of the formula:

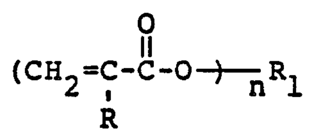

wherein R is H or CH, $R_1$ is an organic moiety and n is 1 or more,

(b) at least one unsaturated polyester containing the group:

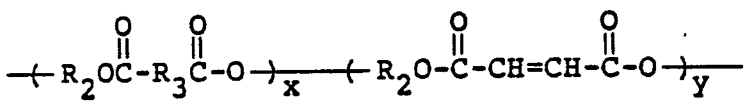

wherein $R_2$ and $R_3$ are organic moieties, x is 0—20 and y is 1—20, and

(c) a mixture of (a) and (b);

(3) 0.5 to 20 parts by weight of a latent curing agent for said epoxide resin, which is inactive in the epoxide resin at room temperature and which is selected from the group consisting of dicyandiamide, melamine, guanamine, polycarboxylic acid polyhydrazides, carboxylic acid imides, imidazole derivatives, $BF_3$ adducts and diaryliodonium salts;

and, optionally,

(4) a curing agent for the plasticizer group member comprising a free radical thermal initiator.

2. A fluxed reactive plastisol dispersion composition comprising

(1) at least one polyvinyl acetal thermoplast having a flow temperature at 70.3 bar between 100° and 200°C;

(2) a liquid plasticizer comprising an epoxide resin having an average more than one epoxide group in the molecule or a mixture of said epoxide resins in combination with a member of the group consisting of

(a) at least one ethylenically unsaturated monomer, oligomer or prepolymer of the formula:

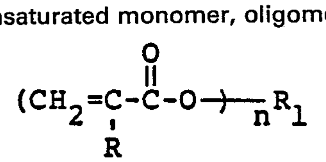

wherein R is H or CH, $R_1$ is an organic moiety and n is 1 or more,

(b) at least one unsaturated polyester containing the group:

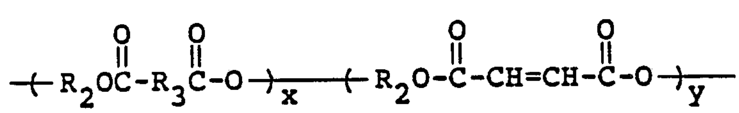

wherein $R_2$ and $R_3$ are organic moieties, x is 0—20 and y is 1—20, and

(c) a mixture of (a) and (b);

(3) an effective amount of a latent curing agent for said epoxide resin, which is inactive in the epoxide resin at room temperature and which is selected from the group consisting of dicyandiamide, melamine, guanamine, polycarboxylic acid polyhydrazides, carboxylic acid imides, imidazole derivatives, $BF_3$ adducts and diaryliodonium salts;

and, optionally,

(4) a curing agent for the plasticizer group member comprising a free radical thermal initiator.

3. The process for adhering two substrates or for sealing of folded seams which comprises

(1) applying between the substrates to be bonded or to the folded seams to be sealed a reactive plastisol dispersion composition comprising

(a) at least one polyvinyl acetal thermoplast in powder form, which is insoluble in the plasticizer at room temperature and plasticizable at a temperature at or above fluxing temperature and which thermoplast has a flow temperature at 70.3 bar of between 100° and 200°C;

(b) a liquid plasticizer comprising an epoxide resin having on average more than one epoxide group in the molecule or a mixture of said epoxide resins; and

(c) an effective amount of a latent curing agent for said epoxide resin which is inactive in the epoxide resin at room temperature and which is selected from the group consisting of dicyandiamide, melamine, guanamine, polycarboxylic acid polyhydrazides, carboxylic acid imides, imidazole derivatives, $BF_3$ adducts and diaryliodonium salts;

(2) heating the composition to its fluxing temperature below the melting point of the thermoplast to obtain a fluxed solid having handling strength and, thereafter,

(3) heating the fluxed solid to a temperature below the melting point of the thermoplast for a time sufficient to obtain a thermoset bond or seal.

4. The process according to Claim 3 wherein the plasticizer contains in addition a member of the group consisting of

(a) at least one ethylenically unsaturated monomer, oligomer or prepolymer of the formula:

$$(CH_2{=}\underset{R}{C}{-}\overset{O}{\overset{\|}{C}}{-}O{-})_n R_1$$

wherein R is H or CH, $R_1$ is an organic moiety and n is 1 or more,

(b) at least one unsaturated polyester containing the group:

$$-(R_2O\overset{O}{\overset{\|}{C}}-R_3\overset{O}{\overset{\|}{C}}-O-)_x-(R_2O-\overset{O}{\overset{\|}{C}}-CH{=}CH-\overset{O}{\overset{\|}{C}}-O-)_y-$$

wherein $R_2$ and $R_3$ are organic moieties, x is 0—20 and y is 1—20, and

(c) a mixture of (a) and (b).

5. The process according to Claim 4 wherein the composition contains a free radical thermal initiator for the plasticizer group member.

6. The process for adhering two substrates or for sealing of folded seams which comprises

(1) applying between the substrates to be bonded or to the folded seams to be sealed a reactive plastisol dispersion composition comprising

(a) at least one polyvinyl acetal thermoplast in powder form, which is insoluble in the plasticizer at room temperature and plasticizable at a temperature at or above fluxing temperature and which thermoplast has a flow temperature at 70.3 bar of between 100° and 200°C;

(b) a liquid plasticizer comprising an epoxide resin having on average more than one epoxide group in the molecule or a mixture of said epoxide resins; and

(c) an effective amount of a latent curing agent for said epoxide resin which is inactive in the epoxide resin at room temperature and which is selected from the group consisting of dicyandiamide, melamine, guanamine, polycarboxylic acid polyhydrazides, carboxylic acid imides, imidazole derivatives, $BF_3$ adducts and diaryliodonium salts;

(2) heating the composition to a temperature below the melting point of the thermoplast for a time sufficient to flux and cure the composition and obtain a thermoset bond or seal.

7. The process according to Claim 6 wherein the plasticizer contains in addition a member of the group consisting of

(a) at least one ethylenically unsaturated monomer, oligomer or prepolymer of the formula:

$$(CH_2{=}\underset{R}{C}{-}\overset{O}{\overset{\|}{C}}{-}O{-})_n R_1$$

wherein R is H or CH, $R_1$ is an organic moiety and n is 1 or more,

(b) at least one unsaturated polyester containing the group:

$$-(R_2O\overset{O}{\overset{\|}{C}}-R_3\overset{O}{\overset{\|}{C}}-O)_x-(R_2O-\overset{O}{\overset{\|}{C}}-CH=CH-\overset{O}{\overset{\|}{C}}-O)_y-$$

wherein $R_2$ and $R_3$ are organic moieties, x is 0—20 and y is 1—20, and

(c) a mixture of (a) and (b).

8. The process according to Claim 7 wherein the composition contains a free radical thermal initiator for the plasticizer group member.

9. The process for adhering two substrates or for sealing of folded seams which comprises

(1) applying between the substrates to be bonded or to the folded seams to be sealed a fluxed, reactive plastisol dispersion composition comprising

(a) at least one polyvinyl acetal thermoplast in powder form having a flow temperature at 70.3 bar of between 100° and 200°C;

(b) a liquid plasticizer comprising an epoxide resin having on average more than one epoxide group in the molecule or a mixture of said epoxide resins; and

(c) an effective amount of a latent curing agent for said epoxide resin which is inactive in the epoxide resin at room temperature and which is selected from the group consisting of dicyandiamide, melamine, guanamine, polycarboxylic acid polyhydrazides, carboxylic acid imides, imidazole derivatives, $BF_3$ adducts and diaryliodonium salts;

(2) heating the composition to a curing temperature below the melting point of the thermoplast for a time sufficient to obtain a thermoset bond or seal.

10. The process according to Claim 9 wherein the plasticizer contains in addition a member of the group consising of

(a) at least one ethylenically unsaturated monomer, oligomer or prepolymer of the formula:

$$(CH_2=\underset{R}{C}-\overset{O}{\overset{\|}{C}}-O)_n R_1$$

wherein R is H or CH, $R_1$ is an organic moiety and n is 1 or more,

(b) at least one unsaturated polyester containing the group:

$$-(R_2O\overset{O}{\overset{\|}{C}}-R_3\overset{O}{\overset{\|}{C}}-O)_x-(R_2O-\overset{O}{\overset{\|}{C}}-CH=CH-\overset{O}{\overset{\|}{C}}-O)_y-$$

wherein $R_2$ and $R_3$ are organic moieties, x is 0—20 and y is 1—20, and

(c) a mixture of (a) and (b).

11. The process according to Claim 10 wherein the composition contains a free radical thermal initiator for the plasticizer group member.

12. The process according to Claim 3 wherein the heating in fluxing step (2) is carried out by electromagnetic heating.

13. The process according to Claim 12 wherein the electromagnetic heating is by dielectric heating.

14. The process according to Claim 12 wherein the electromagnetic heating is by inducation heating.

**Patentansprüche**

1. Reaktive Plastisoldispersionszusammensetzung, die

(1) 100 Gewichtsteile von zumindest einem Polyvinylacetal-Thermoplasten in Pulverform, welcher bei Raumtemperatur in dem Weichmacher unlöslich ist und bei der Geliertemperatur oder oberhalb davon verformbar ist, wobei der Thermoplast bei 70,3 bar eine Fließtemperatur zwischen 100 und 200°C aufweist;

(2) 50 bis 2000 Gewichtsteile eines flüssigen Weichmachers, welcher ein Epoxidharz mit durchschnittlich mehr als einer Epoxidgruppe im Molekül oder eine Mischung der Epoxidharze in Verbindung mit einer Substanz aus der Gruppe von

(a) zumindest einem ethylenische ungesättigten Monomer, Oligomer oder Präpolymer der Formel

$$(CH_2=\underset{R}{C}-\overset{O}{\overset{\|}{C}}-O)_n R_1$$

in der R H oder CH ist, $R_1$ ein organischer Rest ist und n größer oder gleich 1 ist,

(b) zumindest einem ungesättigten Polyester, der die Gruppe

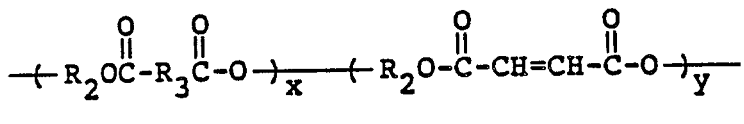

enthält, in der $R_2$ und $R_3$ organische Reste sind, x 0 bis 20 und y 1 bis 20 sind, und

(c) einer Mischung aus (a) und (b) enthält;

(3) 0,5 bis 20 Gewichtsteile eines latenten Härters für das Epoxidharz, welcher in dem Epoxidharz bei Raumtemperatur inaktiv ist und aus der Gruppe von Dicyandiamid, Melamin, Guanamin, Polycarbonsäurepolyhydraziden, Carbonsäureimiden, Imidazolderivaten, $BF_3$-Addukten und Diaryljodoniumsalzen ausgewählt ist;

und gegebenenfalls

(4) einen Härter für die Weichmacher-Substanz enthält, welcher einen thermischen Radikalinitiator umfaßt.

2. Gelierte reaktive Plastisoldispersionszusammensetzung, die

(1) zumindest einen Polyvinylacetal-Thermoplasten, welcher bei 70,3 bar eine Fließtemperatur zwischen 100 und 200°C aufweist;

(2) einen flüssigen Weichmacher, welcher ein Epoxidharz mit im Durchschnitt mehr als einer Epoxidgruppe im Molekül oder eine Mischung der Epoxidharze in Verbindung mit einer Substanz aus der Gruppe von

(a) zumindest einem ethylenisch ungesättigten Monomer, Oligomer oder Präpolymer der Formel

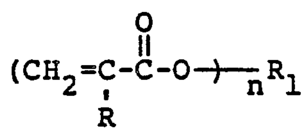

in der R H oder CH ist, $R_1$ ein organischer Rest ist und n größer oder gleich 1 ist,

(b) zumindest einem ungesättigten Polyester, der die Gruppe

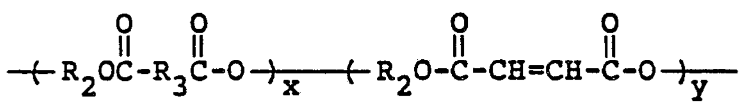

enthält, in der $R_2$ und $R_3$ organische Reste sind, x 0 bis 20 und y 1 bis 20 sind, und

(c) einer Mischung aus (a) und (b) enthält;

(3) eine wirksame Menge eines latenten Härters für das Epoxidharz, welcher bei Raumtemperatur in dem Epoxidharz inaktiv ist und aus der Gruppe von Dicyandiamid, Melamin, Guanamin, Polycarbonsäurepolyhydraziden, Carbonsäureimiden, Imidazolderivaten, $BF_3$-Addukten und Diaryljodoniumsalzen ausgewählt ist;

und gegebenenfalls

(4) einen Härter für die Weichmacher-Substanz enthält, welcher einen thermischen Radikalinitiator umfaßt.

3. Verfahren zum Verkleben von zwei Substraten oder zum Versiegeln von gefalteten Nähten, bei dem

(1) zwischen die zu verbindenden Substrate oder auf die zu versiegelnden gefalteten Nähte eine reaktive Plastisoldispersionszusammensetzung aufgebracht wird, welche

(a) zumindest einen Polyvinylacetal-Thermoplasten in Pulverform, welcher bei Raumtemperatur in dem Weichmacher unlöslich ist und bei der Geliertemperatur oder oberhalb davon verformbar ist, wobei der Thermoplast bei 70,3 bar eine Fließtemperatur zwischen 100 und 200°C aufweist;

(b) einen flüssigen Weichmacher, welcher ein Epoxidharz mit im Durchschnitt mehr als einer Epoxidgruppe in dem Molekül oder eine Mischung der Epoxidharze und

(c) eine wirksame Menge eines latenten Härters für das Epoxidharz enthält, welcher bei Raumtemperatur in dem Epoxidharz inaktiv ist und aus der Gruppe von Dicyandiamid, Melamin, Guanamin, Polycarbonsäurepolyhydraziden, Carbonsäureimiden, Imidazolderivaten, $BF_3$-Addukten und Diaryljodoniumsalzen ausgewählt ist;

(2) die Zusammensetzung auf ihre Geliertemperatur unterhalb des Schmelzpunktes des Thermoplasten erwärmt wird, um einen gelierten Feststoff mit Verarbeitungsfestigkeit zu erhalten und danach

(3) der gelierte Feststoff genügend lange auf eine Temperatur unterhalb des Schmelzpunktes des Thermoplasten erwärmt wird, die ausreicht, um eine wärmegehärtete Verbindung oder Versiegelung zu erhalten.

4. Verfahren nach Anspruch 3, bei dem der Weichmacher zusätzlich eine Substanz aus der Gruppe von

(a) zumindest einem ethylenisch ungesättigten Monomer, Oligomer oder Präpolymer der Formel

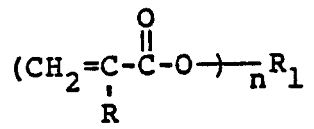

in der R H oder CH ist, $R_1$ ein organischer Rest ist und n größer oder gleich 1 ist,

(b) zumindest einem ungesättigten Polyester, der die Gruppe

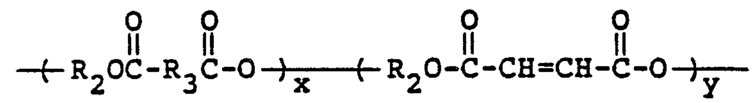

enthält, in der $R_2$ und $R_3$ organische Reste sind, x 0 bis 20 und y 1 bis 20 sind, und

(c) einer Mischung aus (a) und (b) enthält.

5. Verfahren nach Anspruch 4, bei dem die Zusammensetzung einen thermischen Radikalinitiator für die Weichmacher-Substanz enthält.

6. Verfahren zum Verkleben von zwei Substraten oder zum Versiegeln von gefalteten Nähten, bei dem

(1) zwischen die zu verbindenden Substrate oder auf die zu versiegelnden gefalteten Nähte eine reaktive Plastisoldispersionszusammensetzung aufgebracht wird, welche

(a) zumindest einen Polyvinylacetal-Thermoplasten in Pulverform, welcher bei Raumtemperatur in dem Weichmacher unlöslich ist und bei der Geliertemperatur oder oberhalb davon verformbar ist, wobei der Thermoplast bei 70,3 bar eine Fließtemperatur zwischen 100 und 200°C aufweist;

(b) einen flüssigen Weichmacher, welcher ein Epoxidharz mit im Durchschnitt mehr als einer Epoxidgruppe in dem Molekül oder eine Mischung der Epoxidharze und

(c) eine wirksame Menge eines latenten Härters für das Epoxidharz enthält, welcher bei Raumtemperatur in dem Epoxidharz inaktiv ist und aus der Gruppe von Dicyandiamid, Melamin, Guanamin, Polycarbonsäurepolyhydraziden, Carbonsäureimiden, Imidazolderivaten, $BF_3$-Addukten und Diaryljodoniumsalzen ausgewählt ist; und

(2) die Zusammensetzung genügend lange auf eine Temperatur unterhalb des Schmelzpunktes des Thermoplasten erwärmt wird, um die Zusammensetzung zu gelieren und zu härten und eine wärmegehärtete Verbindung oder Versiegelung zu erhalten.

7. Verfahren nach Anspruch 6, bei dem der Weichmacher zusätzlich eine Substanz aus der Gruppe von

(a) zumindest einem ethylenisch ungesättigten Monomer, Oligomer oder Präpolymer der Formel

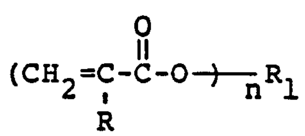

in der R H oder CH ist, $R_1$ ein organischer Rest ist und n größer oder gleich 1 ist,

(b) zumindest einem ungesättigten Polyester, der die Gruppe

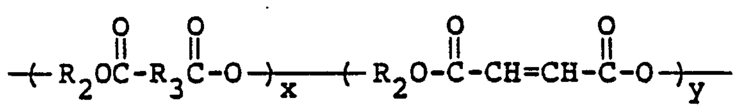

enthält, in der $R_2$ und $R_3$ organische Reste sind, x 0 bis 20 und y 1 bis 20 sind, und

(c) einer Mischung aus (a) und (b) enthält.

8. Verfahren nach Anspruch 7, bei dem die Zusammensetzung einen thermischen Radikalinitiator für die Weichmacher-Substanz enthält.

9. Verfahren zum Verbinden von zwei Substraten oder zum Versiegeln von gefalteten Nähten, bei dem

(1) zwischen die zu verbindenden Substrate oder auf die zu versiegelnden gefalteten Nähte eine gelierte reaktive Plastisoldispersionszusammensetzung aufgebracht wird, welche

(a) zumindest einen Polyvinylacetal-Thermoplasten in Pulverform, welcher bei 70,3 bar eine Fließtemperatur zwischen 100 und 200°C aufweist;

(b) einen flüssigen Weichmacher, welcher ein Epoxidharz mit im Durchschnitt mehr als einer Epoxidgruppe in Molekül oder eine Mischung der Epoxidharze enthält; und

(c) eine wirksame Menge eines latenten Härters für das Epoxidharz enthält, welcher bei Raumtemperatur in dem Epoxidharz inaktiv ist und aus der Gruppe von Dicyandiamid, Melamin, Guanamin, Polycarbonsäurepolyhydraziden, Carbonsäureimiden, Imidazolderivaten, $BF_3$-Addukten und Diaryljodoniumsalzen ausgewählt ist; und

(2) die Zusammensetzung genügend lange auf eine Härtungstemperatur unterhalb des Schmelzpunktes des Thermoplasten erwärmt wird, die ausreicht, um eine wärmegehärtete Verbindung oder Versiegelung zu erhalten.

10. Verfahren nach Anspruch 9, bei dem der Weichmacher zusätzlich eine Substanz aus der Gruppe von

(a) zumindest einem ethylenisch ungesättigten Monomer, Oligomer oder Präpolymer der Formel

$$(CH_2=\underset{R}{C}-\overset{\overset{O}{\|}}{C}-O)_n R_1$$

in der R H oder CH ist, $R_1$ ein organischer Rest ist und n größer oder gleich 1 ist,

(b) zumindest einem ungesättigten Polyester, der die Gruppe

$$-(R_2O\overset{\overset{O}{\|}}{C}-R_3\overset{\overset{O}{\|}}{C}-O)_x-(R_2O-\overset{\overset{O}{\|}}{C}-CH=CH-\overset{\overset{O}{\|}}{C}-O)_y-$$

enthält, in der $R_2$ und $R_3$ organische Reste sind, x 0 bis 20 und y 1 bis 20 sind, und

(c) einer Mischung aus (a) und (b) enthält.

11. Verfahren nach Anspruch 10, bei dem die Zusammensetzung einen thermischen Radikalinitiator für die Weichmacher-Substanz enthält.

12. Verfahren nach Anspruch 3, bei dem das Erwärmen im Gelierschritt (2) durch elektromagnetisches Erwärmen durchgeführt wird.

13. Verfahren nach Anspruch 12, bei dem das elektromagnetische Erwärmen mit Hilfe von Hochfrequenzerhitzung durchgeführt wird.

14. Verfahren nach Anspruch 12, bei dem das elektromagnetische Erwärmen mit Hilfe von Induktionserhitzen durchgeführt wird.

**Revendications**

1. Composition de dispersion de plastisol réactif comprenant

(1) 100 parties en poids d'au moins un thermoplastique d'acétal de polyvinyle sous forme de poudre, qui est insoluble dans le plastifiant à température ambiente et qui est plastifiable à la température de plastification ou au-dessus et qui a une température d'écoulement à 70,3 bars entre 100 et 200°C,

(2) 50 à 2 000 parties en poids d'un plastifiant liquide comprenant une résine époxy ayant en moyenne plus d'un groupe époxy dans la molécule ou un mélange desdites résines époxy en combinaison avec un membre du groupe consistant en

(a) au moins un monomère, oligomère, ou prépolymère éthyléniquement insaturé de formule:

$$(CH_2=\underset{R}{C}-\overset{\overset{O}{\|}}{C}-O)_n R_1$$

dans laquelle R est H ou CH, $R_1$ est un reste organique et n est 1 ou plus,

(b) au moins un polyester insaturé contenant le groupe:

$$-(R_2O\overset{\overset{O}{\|}}{C}-R_3\overset{\overset{O}{\|}}{C}-O)_x-(R_2O-\overset{\overset{O}{\|}}{C}-CH=CH-\overset{\overset{O}{\|}}{C}-O)_y-$$

dans lequel $R_2$ et $R_3$ sont des restes organiques, x est 0—20 et y est 1—20, et

(c) un mélange de (a) et (b);

(3) 0,5 à 20 parties en poids d'un durcisseur latent pour ladite résine époxy, qui est inactif dans la résine époxy à température ambiante et qui est choisi dans le groupe consistant en la dicyandiamide, la mélamine, la guanamine, les polyhydrazides d'acide polycarboxylique, les imides d'acide carboxylique, les dérivés de l'imidazole, les produits d'addition de $BF_3$ et les sels de diaryliodonium;

et, éventuellement,

(4) un durcisseur pour le membre du groupe du plastifiant comprenant un initiateur thermique de radicaux libres.

2. Composition de dispersion de plastisol réactif plastifiée comprenant

(1) au moins un thermoplastique d'acétal de polyvinyle ayant une température d'écoulement à 70,3 bars entre 100 et 200°C;

(2) un plastifiant liquide comprenant une résine époxy ayant en moyenne plus d'un groupe époxy dans la molécule ou un mélange desdites résines époxy en combinaison avec un membre du groupe consistant en

(a) au moins un monomère, oligomère ou prépolymère éthyléniquement insaturé de formule:

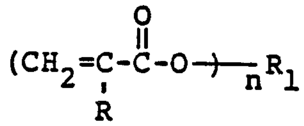

dans laquelle R est H ou CH, $R_1$ est un reste organique et n est 1 ou plus,

(b) au moins un polyester insaturé contenant le groupe:

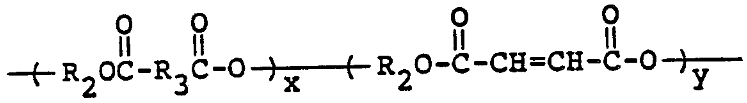

dans lequel $R_2$ et $R_3$ sont des restes organiques, x est 0—20 et y est 1—20, et

(c) un mélange de (a) et (b);

(3) une quantité efficace d'un durcisseur latent pour ladite résine époxy, qui est inactif dans la résine époxy à température ambiante et qui est choisi dans le groupe consistant en la dicyandiamide, la mélamine, la guanamine, les polyhydrazides d'acide polycarboxylique, les imides d'acide carboxylique, les dérives de l'imidazole, les produits d'addition de $BF_3$ et les sels de diaryliodonium;

et, éventuellement,

(4) un durcisseur pour le membre du groupe du plastifiant comprenant un initiateur thermique de radicaux libres.

3. Procédé pour faire adhérer deux substrats ou pour assurer l'étanchéïté d'agrafes qui comprend

(1) l'application entre les substrats à lier ou aux agrafes à étanchéïfier d'une composition de dispersion de plastisol réactif comprenant

(a) au moins un thermoplastique d'acétal de polyvinyle sous forme d'une poudre, qui est insoluble dans le plastifiant à la température ambiante et qui est plastifiable à la température de plastification ou au-dessus et qui a une température d'écoulement à 70,3 bars entre 100 et 200°C;

(b) un plastifiant liquide comprenant une résine époxy ayant en moyenne plus d'un groupe époxy dans la molécule ou un mélange desdites résines époxy; et

(c) une quantité efficace d'un durcisseur latent pour ladite résine époxy qui est inactif dans la résine époxy à la température ambiante et qui est choisi dans le groupe consistant en la dicyandiamide, la mélamine, la guanamine, les polyhydrazides d'acide polycarboxylique, les imides d'acide carboxylique, les dérivés de l'imidazole, les produits d'addition de $BF_3$ et les sels de diaryliodonium;

(2) le chauffage de la composition à sa température de plastification au-dessous du point de fusion du thermoplastique pour obtenir un solide plastifié ayant une résistance à la manipulation et ensuite,

(3) le chauffage du solide plastifié à une température au-dessous du point de fusion du thermoplastique pendant une durée suffisante pour obtenir une liaison ou un joint thermodurci.

4. Procédé selon la revendication 3, caractérisé en ce que le plastifiant contient en outre un membre du groupe consistant en

(a) au moins un monomère, oligomère ou prépolymère éthyléniquement insaturé de formule:

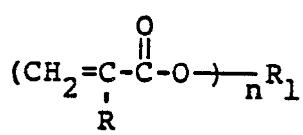

dans laquelle R est H ou CH, $R_1$ est un reste organique et n est 1 ou plus,

(b) au moins un polyester insaturé contenant le groupe:

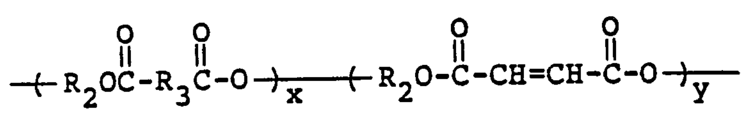

dans lequel $R_2$ et $R_3$ sont des restes organiques, x est 0—20 et y est 1—20, et

(c) un mélange de (a) et de (b);

5. Procédé selon la revendication 4, caractérisé en ce que la composition contient un initiateur thermique de radicaux libres pour le membre du groupe du plastifiant.

6. Procédé pour faire adhérer deux substrats ou pour assurer l'étanchéïté d'agrafes qui comprend

(1) l'application entre les substrats à lier ou aux agrafes à étanchéïfier d'une composition de dispersion de plastisol réactif comprenant

(a) au moins un thermoplastique d'acétal de polyvinyle sous forme de poudre qui est insoluble dans le plastifiant à la température ambiante et qui est plastifiable à la température de plastification ou au-dessus et qui a une température d'écoulement à 70,3 bars entre 100 et 200°C;

(b) un plastifiant liquide comprenant une résine époxy ayant en moyenne plus d'un groupe époxy dans la molécule ou un mélange desdites résines époxy; et

(c) une quantité efficace d'un durcisseur latent pour ladite résine époxy qui est inactif dans la résine époxy à la temperature ambiante et qui est choisi dans le groupe consistant en la dicyandiamide, la mélamine, la guanamine, les polyhydrazides d'acide polycarboxylique, les imides d'acide carboxylique, les dérivés de l'imidazole, les produits d'addition de $BF_3$ et les sels de diaryliodonium;

(2) le chauffage de la composition à une température ou-dessous du point de fusion du thermoplastique pendant une durée suffisante pour plastifier et durcir la composition et obtenir une liaison ou joint thermodurci.

7. Procédé selon la revendication 6, caractérisé en ce que le plastifiant contient en outre un membre du groupe consistant en

(a) au moins un monomère, oligomère, ou prépolymère éthyléniquement insaturé de formule:

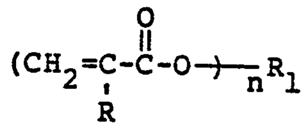

dans laquelle R est H ou CH, $R_1$ est un reste organique et n est 1 ou plus,

(b) au moins un polyester insaturé contenant le groupe:

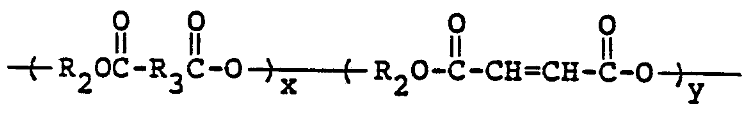

dans lequel $R_2$ et $R_3$ sont des restes organiques, x est 0—20 et y est 1—20, et

(c) un mélange de (a) et de (b).

8. Procédé selon la revendication 7, caractérisé en ce que la composition contient un initiateur thermique de radicaux libres pour le membre du groupe du plastifiant.

9. Procédé pour faire adhérer deux substrats ou pour assurer l'étanchéïté d'agrafes qui comprend.

(1) l'application entre les substrats à lier ou aux agrafes à étanchéïfier d'une composition plastifiée de dispersion de plastisol réactif comprenant

(a) au moins un thermoplastique d'acétal de polyvinyle sous forme d'une poudre ayant une température d'écoulement à 70,3 bars entre 100 et 200°C;

(b) un plastifiant liquide comprenant une résine époxy ayant en moyenne plus d'un groupe époxy dans la molécule ou un mélange desdites résines époxy; et

(c) une quantité efficace d'un durcisseur latent pour ladite résine époxy qui est inactif dans la résine époxy à la temperature ambiante et qui est choisi dans le groupe consistant en la dicyandiamide, la mélamine, la guanamine, les polyhydrazides d'acide polycarboxylique, les imides d'acide carboxylique, les dérivés de l'imidazole, les produits d'addition de $BF_3$ et les sels de diaryliodonium;

(2) le chauffage de la composition à une température de durcissement au-dessous du point de fusion du thermoplastique pendant une durée suffisante pour obtenir une liaison ou joint thermodurci.

10. Procédé selon la revendication 9, caractérisé en ce que le plastifiant contient en outre un membre du groupe consistant en

(a) au moins un monomère, oligomère ou prépolymère éthyléniquement insaturé de formule:

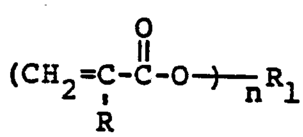

dans laquelle R est H ou CH, $R_1$ est un reste organique et n est 1 ou plus,

(b) au moins un polyester insaturé contenant le groupe:

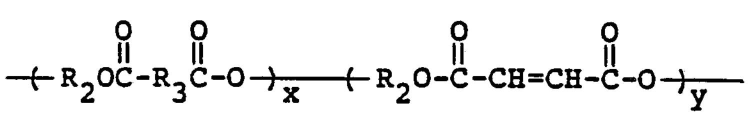

dans lequel $R_2$ et $R_3$ sont des restes organiques, x est 0—20 et y est 1—20, et

(c) un mélange de (a) et de (b).

11. Procédé selon la revendication 10, caractérisé en ce que la composition contient un initiateur thermique de radicaux libres pour le membre du groupe du plastifiant.

12. Procédé selon la revendication 3, caractérisé en ce que le chauffage dans l'étape de plastification (2) est réalisé par chauffage électromagnétique.

13. Procédé selon la revendication 12, caractérisé en ce que le chauffage électromagnétique est un chauffage diélectrique.

14. Procédé selon la revendication 12, caractérisé en ce que le chauffage électromagnétique est un chauffage par induction.